# EUROPEAN PATENT SPECIFICATION

(11) **EP 4 231 676 B1**
(45) Date of publication and mention of the grant of the patent: **30.07.2025**
(21) Application number: 20960505.4
(22) Date of filing: 09.11.2020
(51) Int. Cl.: H04L 67/51, H04W 4/50, H04L 61/4511, H04L 67/52

(54) **COMMUNICATION METHOD AND APPARATUS AND COMPUTER READABLE STORAGE MEDIUM**
KOMMUNIKATIONSVERFAHREN UND -VORRICHTUNG UND COMPUTERLESBARES SPEICHERMEDIUM
PROCÉDÉ ET APPAREIL DE COMMUNICATION ET SUPPORT DE STOCKAGE LISIBLE PAR ORDINATEUR

(43) Date of publication of application: 23.08.2023
(73) Proprietor: Huawei Technologies Co., Ltd., Shenzhen, Guangdong 518129 (CN)
(72) Inventor: CHEN, Zehao, Shenzhen, Guangdong 518129 (CN); LI, Yongcui, Shenzhen, Guangdong 518129 (CN); NI, Hui, Shenzhen, Guangdong 518129 (CN)
(74) Representative: Gill Jennings & Every LLP
(86) International application number: PCT/CN2020/127592
(87) International publication number: WO 2022/095048

(56) References cited:
- WO-A1-2020/018012
- WO-A1-2020/207490
- CN-A- 109 729 181
- CN-A- 110 535 930
- CN-A- 111 385 369
- "3rd Generation Partnership Project; Technical Specification Group Services and System Aspects; Study on enhancement of support for Edge Computing in 5G Core network (5GC) (Release 17)", 30 October 2020 (2020-10-30), XP051949933, Retrieved from the Internet <URL:https://ftp.3gpp.org/tsg_sa/WG2_Arch/Latest_SA2_Specs/Latest_draft_S2_Specs/23748-110.zip 23748-110_MCCclean.docx> [retrieved on 20201030]
- CHINA MOBILE: "Key issue1: A merged solution of session breakout scenario with UPF based for key issue1", vol. SA WG2, no. Electronic; 20200819 - 20200902, 13 August 2020 (2020-08-13), XP051920022, Retrieved from the Internet <URL:https://ftp.3gpp.org/tsg_sa/WG2_Arch/TSGS2_140e_Electronic/Docs/S2-2005193.zip S2-2005193.docx> [retrieved on 20200813]
- TENCENT: "KI# 1, Sol #3,6: Update to Clarify DNS Handling", 3GPP DRAFT; S2-2004159, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting ;20200601 - 20200612, 22 May 2020 (2020-05-22), Mobile Competence Centre ; 650, route des Lucioles ; F-06921 Sophia-Antipolis Cedex ; France , XP051890164

## Description

### TECHNICAL FIELD

Embodiments of this application relate to the field of communication technologies, and in particular, to a communication method and apparatus, and a computer-readable storage medium.

### BACKGROUND

Edge computing (edge computing, EC) may implement local processing of distributed service traffic by moving a user plane function (user plane function, UPF) network element and a service processing capability downward to a network edge. A plurality of edge application servers (edge application servers, EASs) deployed at the network edge may serve a same service. These EASs provide same content for this service, but may have different internet protocol (internet protocol, IP) addresses. When a terminal device needs to access the service, the terminal device needs to access an available EAS nearest to the terminal device. Therefore, when the terminal device has a service requirement, if address information of the EAS needs to be determined, the terminal device needs to obtain, from a session management function (session management function, SMF) network element, information associated with a current location of the terminal device. Different SMF network elements need to serve a large quantity of terminal devices, and each terminal device has a different service requirement. Therefore, massive communication is performed between the SMF network element and the terminal devices, and a large amount of information needs to be transmitted. As a result, a waste of communication resources is caused.
"3rd Generation Partnership Project; Tehcnical Specification Group Services and System Aspects; Study on enhancement of support for Edge Computing in 5G Core network (5GC) (Release 17)" XP051949933 seeks to evaluate potential architecture enhancements to support Edge Computing in the 5G Core network.
CHINA MOBILE: "Key issue1: A merged solution of session breakout scenario with UPF based for key issue1" is a discussion in relation to a merge solution for 13 key questions for DNS based scenarios.

### SUMMARY

Embodiments of this application disclose a communication method and apparatus, and a computer-readable storage medium, to save transmission resources.

According to a first aspect, a communication method and corresponding system is provided as defined in the appended claims.

### BRIEF DESCRIPTION OF DRAWINGS

FIG. 1 is a schematic diagram of a 5G network architecture according to an embodiment of this application;
FIG. 2 is a schematic diagram of a network architecture according to an embodiment of this application;
FIG. 3 is a schematic diagram of another network architecture according to an embodiment of this application;
FIG. 4 is a schematic diagram of local service discovery according to an embodiment of this application;
FIG. 5 is a schematic flowchart of a communication method according to an embodiment of this application;
FIG. 6 is a schematic diagram of DNAI deployment according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic diagram of a structure of a communication apparatus according to an embodiment of this application;
FIG. 13 is a schematic diagram of a structure of another communication apparatus according to an embodiment of this application;
FIG. 14 is a schematic diagram of a structure of still another communication apparatus according to an embodiment of this application;
FIG. 15 is a schematic diagram of a structure of still another communication apparatus according to an embodiment of this application;
FIG. 16 is a schematic diagram of a structure of still another communication apparatus according to an embodiment of this application; and
FIG. 17 is a schematic diagram of a structure of still another communication apparatus according to an embodiment of this application.

### DESCRIPTION OF EMBODIMENTS

Embodiments of this application disclose a communication method and apparatus, and a computer-readable storage medium, to save communication resources. Detailed descriptions are separately provided below.

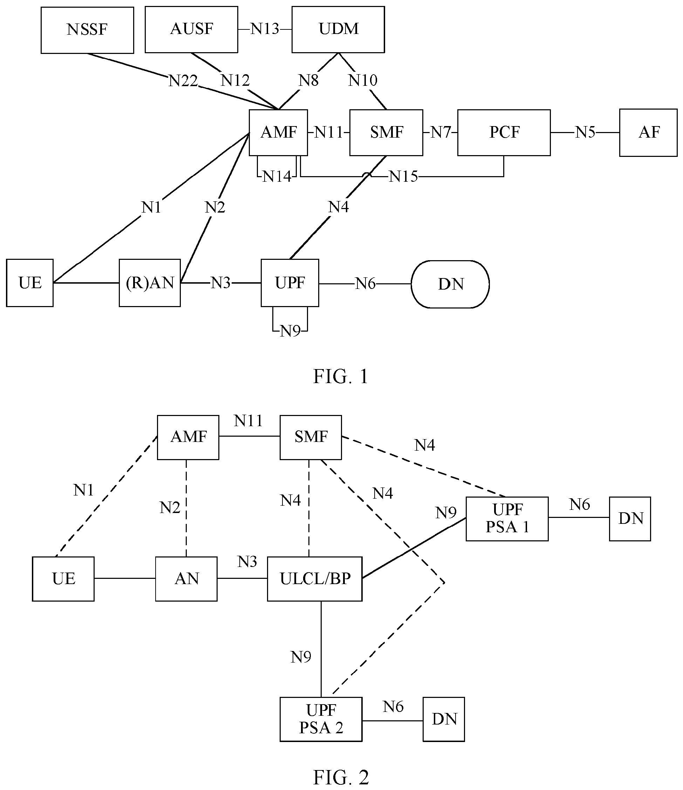

To better understand a communication method and apparatus, and a computer-readable storage medium disclosed in embodiments of this application, the following first describes a network architecture used in embodiments of this application. FIG. 1 is a schematic diagram of a 5G network architecture according to an embodiment of this application. As shown in FIG. 1, the 5G network architecture may include user equipment (user equipment, UE), a (radio) access network (radio access network, (R)AN) device, a user plane function (user plane function, UPF) network element, and a data network (data network, DN), an access and mobility management function (access and mobility management function, AMF) network element, a session management function (session management function, SMF) network element, a policy control function (policy control function, PCF) network element, an application function (application function, AF) network element, a unified data management (unified data management, UDM) network element, an authentication server function (authentication server function, AUSF) network element, and a network slice selection function (network slice selection function, NSSF) network element. Different network elements or devices may communicate with each other through an interface. An interface name shown in FIG. 1 is merely an example for description. This is not specifically limited in embodiments of this application.

The UE may alternatively be referred to as a terminal device, a mobile station (mobile station, MS), a mobile terminal (mobile terminal, MT), or the like, and is a device that provides a user with voice or data connectivity. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem, a handheld (handheld) device, a laptop computer, a cordless phone (cordless phone), or a wireless local loop (wireless local loop, WLL) station, a machine type communication (machine type communication, MTC) terminal, a wearable device (for example, a smartwatch, a smartband, or a pedometer), a vehicle-mounted device (for example, the vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or other devices that can access a network. The terminal device in FIG. 1 is shown by using the UE. This is merely used as an example and is not limited to the terminal device. The UE may access a DN by establishing a session among the UE, the (R)AN device, a UPF, and the DN, that is, a protocol data unit (protocol data unit, PDU) session.

The (R)AN device is a device that provides radio access for the UE, and is mainly responsible for functions such as radio resource management, quality of service (quality of service, QoS) flow management, and data compression and encryption on an air interface side. The (R)AN device may include base stations in various forms, for example, a macro base station, a micro base station (also referred to as a small cell), a relay station, and an access point. The (R)AN device may further include a wireless fidelity (wireless fidelity, Wi-Fi) access point (access point, AP). The (R)AN device may further include a worldwide interoperability for microwave access (worldwide interoperability for microwave access, WiMax) base station (base station, BS).

The UPF network element is mainly responsible for processing a user packet, such as forwarding and charging for the user packet. The user packet may be received from the DN, and transmitted to the UE through the RAN device. Alternatively, the user packet may be received from the UE through the RAN device, and forwarded to the DN. Transmission resources and scheduling functions in the UPF network element that provide services for the UE are managed and controlled by the SMF network element.

The DN may be an Internet (Internet), an IP multimedia service (IP multimedia service, IMS) network, a regional network, that is, a local network, for example, a multi-access edge computing (multi-access edge computing, MEC) network, or the like. The DN is a destination that a PDU session of the UE accesses. The DN includes or is deployed with an application server, and the application server may perform data transmission with the UE, to provide a service for the UE.

The AMF network element may access non-access stratum (non-access stratum, NAS) signaling (including session management (session management, SM) signaling) of the UE through an N1 interface and access RAN signaling through an N2 interface, to complete a UE registration procedure, SM signaling forwarding, and mobility management.

The SMF network element is mainly responsible for session management in a mobile network, such as session establishment, modification, release, and update. For example, specific functions are allocation of an IP address for a user and selection of a UPF network element that provides a packet forwarding function.

The PCF network element may be responsible for terminal device policy management, including both a mobility related policy and a PDU session related policy, such as a QoS policy and a charging policy.

The AF network element mainly supports interaction with a 3rd generation partnership project (3rd generation partnership project, 3GPP) core network to provide a service, to affect service flow routing, access network capability exposure, policy control, and the like.

The UDM network element is responsible for user key management, user identifier processing, subscription data access authorization, network function entity management of the UE, session and service continuity management, short message push, lawful interception, subscription management, short message management, and user data management and control, such as subscription information management.

The AUSF network element may be responsible for performing authentication and authorization on access of the UE.

Each of the network elements in the core network may also be referred to as a functional entity, and may be a network element implemented on dedicated hardware, a software instance running on dedicated hardware, or an instance of a virtualization function on an appropriate platform. For example, the virtualization platform may be a cloud platform.

It should be noted that the system architecture shown in FIG. 1 is not limited to only the network elements shown in the figure, and may further include other devices that are not shown in the figure. Details are not listed one by one in this application.

It should be noted that a distribution form of the network elements in the core network is not limited in this embodiment of this application. The distribution form shown in FIG. 1 is merely an example, and is not a limitation on this application.

It should be understood that names of all network elements in this application are merely used as examples. In future communication, for example, 6G, names of the network elements may also be referred to as other names. Alternatively, in future communication, for example, 6G, the network elements in this application may be replaced with other entities, devices, or the like that have a same function. This is not limited in this application. Unified descriptions are provided herein, and details are not described below again.

It should be noted that the 5G network architecture shown in FIG. 1 does not constitute a limitation on a 5G network. Optionally, the method in this embodiment of this application is further applied to various future communication systems, for example, a 6G system or another communication network.

There is only one UPF network element in the 5G network architecture shown in FIG. 1. Based on the foregoing basic network architecture, 5G may further support insertion of a plurality of session anchor UPF network elements on a user plane path (that is, data path) of a PDU session, to support a connection to a local (local) DN, so that the UE can access a nearby application server in the local DN. FIG. 2 is a schematic diagram of a network architecture according to an embodiment of this application. As shown in FIG. 2, a plurality of UPF network elements are introduced into a network architecture of a communication system. The plurality of UPF network elements may be respectively an uplink classifier (uplink classifier, ULCL)/branching point (branching point, BP), a UPF PDU session anchor (PDU session anchor, PSA) 1, and a UPF PSA 2. The ULCL/BP may distribute an uplink data packet from UE to the PSA 1 or the PSA 2 according to a distribution rule, or may send a downlink data packet from the PSA 1 or the PSA 2 to UE. There is an N6 interface between the PSA 1 and a DN. For example, the DN may be a DN located in a central data center (data central, DC). There is an N6 interface between the PSA 2 and a local DN. For example, the local DN may be located in a local DC or an MEC node. The local DN may also be understood as a DN that deploys an application server to an edge hosting environment (edge hosting environment, EHE) closer to the UE, and may also be referred to as an EAS. When the UE has a service requirement, an SMF network element may insert a UPF network element (namely, a local (local, L)-PSA) corresponding to the local DN, so that the UE can access a nearby application server in the local DN. For example, the PAS 2 in FIG. 2 is an L-PSA. It should be noted that a quantity of UPF network elements in FIG. 2 is merely an example, and more or fewer UPFs may alternatively be included. This is not limited in this application.

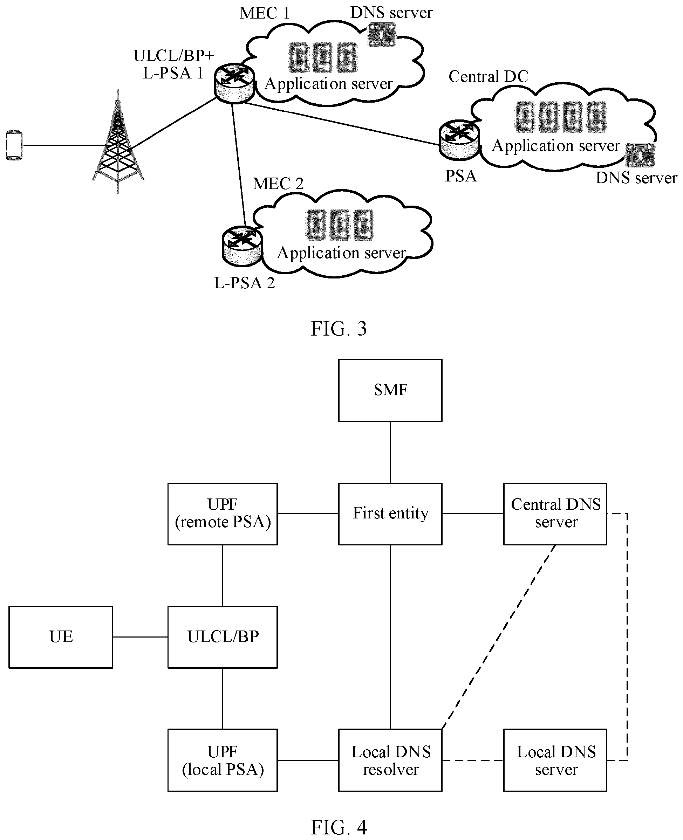

It should be noted that only one L-PSA is shown in FIG. 2. It should be understood that a plurality of L-PSAs and a plurality of ULCLs/BPs may alternatively be included. This is not limited in this application. FIG. 3 is a schematic diagram of another network architecture according to an embodiment of this application. As shown in FIG. 3, there may be a plurality of L-PSAs in the network architecture, for example, an L-PSA 1 and an L-PSA 2 in FIG. 3. In this network architecture, a ULCL/BP may be connected to the plurality of L-PSAs. In this example, the ULCL/BP may be co-deployed with the L-PSA 1, and is connected to an MEC 1; and the L-PSA 2 may be connected to an MEC 2, and a PSA may be connected to a central DC. It should be understood that the ULCL/BP and the L-PSA 1 may alternatively be two independent network elements or devices.

For better understanding embodiments of this application, the following first describes an application scenario of embodiments of this application. In the 4th generation mobile communication technology (the 4th generation mobile communication technology, 4G) and before 4G, user plane devices are basically deployed in a tree topology in conventional mobile network architectures and deployment. An uplink user packet passes through a base station and a backhaul network, and finally accesses a data network through anchor gateways deployed in a centralized manner. These anchor gateways are generally deployed at an upper location in the data network, for example, a central equipment room in a large area. This topology structure is simple, so that an operator can perform centralized service management and control and packet processing at the anchor gateways.

With the explosive growth of mobile service traffic, this deployment mode becomes increasingly difficult to support the fast-growing mobile service traffic model. In an aspect, in a network on which anchor gateways are deployed in a centralized manner, increased traffic is finally concentrated at a gateway and a core equipment room, and requirements on backhaul network bandwidth, an equipment room throughput, and a gateway specification are increasingly high. In another aspect, a long-distance backhaul network from the base station to the anchor gateway and a complex transmission environment cause a long delay and jitter in user packet transmission.

To resolve the foregoing problems, an EC is proposed in the industry. The EC can move a UPF network element and service processing capability to a network edge to implement local processing of distributed service traffic. This avoids excessive traffic concentration and greatly reduces specification requirements for the core equipment room and centralized gateways. In addition, the distance of the backhaul network is shortened, and the delay and jitter of user packets are reduced, making ultra-low delay service deployment possible.

In an EC deployment scenario, EASs corresponding to some services may be deployed at a plurality of network edges in a distributed manner. These EASs provide same services and content, but may have different IP addresses. When UE needs to access the service, in the EC scenario, the UE needs to access an available EAS nearest to the UE. Therefore, the UE needs to obtain an IP address of an appropriate EAS.

FIG. 4 is a schematic diagram of local service discovery according to an embodiment of this application. As shown in FIG. 4, UE may send first request information to a first entity. The first request information may carry or include application identification information. After receiving the first request information from the UE, the first entity may send second request information to an SMF network element. The second request information includes the application identification information. After receiving the second request information from the first entity, the SMF network element may send, to the first entity, information associated with a current location of the UE, for example, an extended mechanisms for DNS (extended mechanisms for DNS, EDNS) client subnet option (EDNS client subnet option, ECS option) or address information of a local DNS resolver (resolver). After receiving the information from the SMF network element, when the information is the ECS option, the first entity may send first DNS request information to a central (central) DNS server. The first DNS request information includes the application identification information and the information. After receiving the first DNS request information from the first entity, the central DNS server may determine address information of an application server corresponding to the application identification information and the information, and send the address information of the application server to the UE by using the first entity. When the information is the address information of the local DNS resolver, the first entity may send the second request information to the local DNS resolver. The second request information includes the application identification information. After receiving the second request information from the first entity, the local DNS resolver may send address information of an application server to the UE when the address information of the application server corresponding to the application identification information and the information can be determined, or may send third request information to the central DNS server or the local DNS server when the address information of the application server corresponding to the application identification information and the information cannot be determined. The second request information and the third request information may be DNS request information, or may be other request information. This is not limited herein. The ECS option may be address information of a local UPF network element, or may be address information of an MEC platform subnet corresponding to a current location of the terminal device, or may be address information of a network segment at which the terminal device is located, or may be other information associated with a location of the terminal device. The address information may be an IP address, or may be other information that can uniquely identify an address.

In the foregoing method, each time the UE sends one piece of request information, the first entity needs to perform signaling interaction with the SMF network element twice. However, both the first entity and the SMF network element serve a large quantity of UEs, and each UE generates a large quantity of pieces of request information. Consequently, signaling interaction between the first entity and the SMF network element is excessively frequent, resulting in a large quantity of signaling overheads and resource insufficiency. In addition, because signaling interaction needs to be performed twice between the first entity and the SMF network element, a delay in obtaining the address information of the application server by the UE is increased.

It should be understood that the first entity may be an independent device or network element, or may be a function or model deployed on another device or network element.

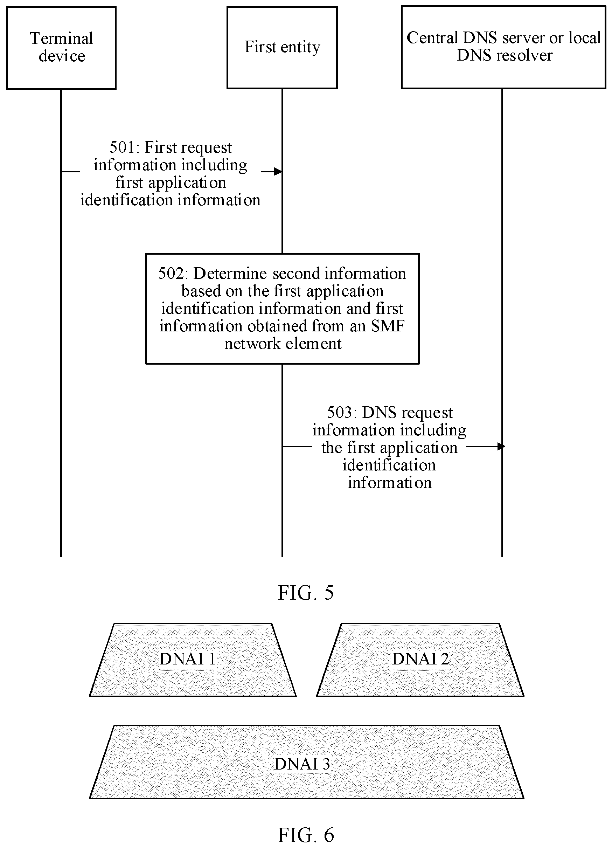

Based on the foregoing network architecture, FIG. 5 is a schematic flowchart of a communication method according to an embodiment of this application. As shown in FIG. 5, the communication method may include the following steps.

501: A terminal device sends first request information including first application identification information to a first entity.

Correspondingly, the first entity may receive, from the terminal device, the first request information including the first application identification information.

When the terminal device has a service requirement, the terminal device may send the first request information to the first entity. The terminal device may send the first request information to the first entity by using a ULCL/BP and a PSA, or may send the first request information to the first entity by using another device or network element. This is not limited herein. The first request information may be DNS request information, or may be a DNS query (query) message, or may be other request information. This is not limited herein. Application identification information is information for identifying an application, and may be a fully qualified domain name (fully qualified domain name, FQDN), or may be an application identifier (application identifier, AppID), or may be a service identifier, or may be other information that can be used for uniquely identifying an application.

In a case, the first request information may not include an identifier of the terminal device, but an SMF network element may determine, by using a PDU session that transmits the first request information, a terminal device that sends the first request information.

In another case, the first request information may further include an identifier of the terminal device. The first entity may determine, based on the identifier of the terminal device, a terminal device that sends the first request information.

502: The first entity determines second information based on the first application identification information and first information obtained from the SMF network element.

After receiving the first request information from the terminal device, the first entity may determine the second information based on the first application identification information and the first information obtained from the SMF network element. The first entity may first search for or match first information including the first application identification information from the first information obtained by the SMF network element, and then may obtain, from the found or matched first information, the second information corresponding to the first application identification information. The second information may be information associated with a current location of the terminal device, that is, information associated with the current location of the terminal device. The second information may be an ECS option, or may be address information of a local DNS resolver, or may be other information associated with a location of the terminal device.

In an implementation, the first information may include the first application identification information and the second information corresponding to the first application identification information. In addition, the first information may further include a third identifier and third information corresponding to the third identifier. The third identifier is application identification information of an application deployed on a data network corresponding to a first identifier, and the third information is an ECS option corresponding to the third identifier or address information of a local DNS resolver corresponding to the third identifier.

The first information may be understood as including two parts: the application identification information and fourth information. The fourth information is the information associated with the current location of the terminal device, includes the second information, and may further include the third information. There may be a one-to-one correspondence between the application identification information and the fourth information included in the first information, in other words, one piece of application identification information corresponds only to one piece of fourth information. Correspondingly, one piece of fourth information corresponds only to one piece of application identification information. There may alternatively be a many-to-one correspondence between the application identification information and the fourth information included in the first information, in other words, one piece of application identification information may correspond to one piece of fourth information, or a plurality of pieces of application identification information may correspond to one piece of fourth information. A relationship between the application identification information and the fourth information may be represented as a correspondence between the application identification information and the fourth information, and may be stored in a form of a data table, a key-value pair, or a context, or another form. A storage form is not limited. For example, the correspondence between the application identification information and the fourth information may be shown in Table 1 or Table 2.

**Table 1**

| Application identification information | Fourth information |
|---|---|
| Application 1 | Information 1 |
| Application 2 | Information 2 |
| ... | ... |
| Application K | Information K |

**Table 2**

| Application identification information | Fourth information |
|---|---|
| Application 1 | Information 1 |
| Application 2 | Information 1 |
| ... | ... |
| Application K | Information M |

K and M are integers greater than or equal to 1. Application 1 to application K in the foregoing tables are application identifiers, and information 1 to information K are information that is associated with the current location of the terminal device and that corresponds to the application identifiers.

Further, the first information may further include a data network access identifier (data network access identifier, DNAI) corresponding to the first application identification information and the second information. The first information may further include a DNAI corresponding to the third identifier and the third information. The DNAI is an identifier of a user plane access to a data network on which an application is deployed (identifier of a user plane access to one or more DN(s) where applications are deployed). The DNAI may be an identifier of an access point of edge computing, or may be an identifier of access (or a location) of a server deployed at a network edge. When the first information includes the DNAI, it may be understood that one piece of application identification information and one DNAI in the first information may uniquely determine one piece of information associated with the current location of the terminal device.

In another implementation, the first information may include the first application identification information, a first identifier, and the second information corresponding to the first application identification information and the first identifier. The first identifier is at least one DNAI. The first information may further include a third identifier, the first identifier, and third information corresponding to the first identifier and the third identifier.

One DNAI and one piece of application identification information included in the first information may uniquely determine one piece of fourth information. A relationship among the DNAI, the application identification information, and the fourth information may be represented as a correspondence among the DNAI, the application identification information, and the fourth information, and may be stored in a form of a data table, a key-value pair, or a context, or in another form. A storage form is not limited. For example, the correspondence among the DNAI, the application identification information, and the fourth information may be shown in Table 3.

**Table 3**

| DNAI | Application identification information | Fourth information |
|---|---|---|
| DNAI 1 | Application 1 | Information 1 |
| DNAI 2 | Application 2 | Information 2 |
| ... | ... | ... |
| DNAI K | Application K | Information K |

Information 1 to information K in Table 3 correspond to K pieces of different information. A same application may exist in applications corresponding to application 1 to application K, and a same DNAI may exist in

DNAI 1 to DNAI K, but a same combination of a DNAI and application identification information should not exist.

It can be learned that the first information may include not only information currently required for determining the second information, but also information not currently required for determining the second information. The information may be used after the first entity receives other request information including the application identification information, so that interaction between the first entity and the SMF network element can be reduced, thereby saving transmission resources.

The SMF network element may send the first information to the first entity. The SMF network element may actively send the first information to the first entity. For example, when the SMF network element detects that the terminal device establishes a PDU session, or a DNAI corresponding to the current location of the terminal device changes, the SMF network element may send the first information to the first entity. Alternatively, the SMF network element may send the first information to the first entity after receiving information used to obtain the first information from the first entity.

Correspondingly, the first entity may receive the first information from the SMF network element. The first information may be received by the first entity before or when the first entity receives the first request information, or may be received by the first entity after the first entity receives the first request information. When the first information is received by the first entity before the first entity receives the first request information, the first information may be actively sent by the SMF to the first entity, or may be obtained by the first entity from the SMF network element after the first entity previously receives other request information including the application identification information. Therefore, after receiving the first request information, the first entity does not need to obtain the first information from the SMF network element, so that interaction between the first entity and the SMF network element can be reduced, thereby saving transmission resources.

After receiving the first request information from the terminal device, the first entity may first determine whether the first information that can be used to determine the second information exists. When determining that the first information that can be used to determine the second information exists, the first entity may determine the second information based on the first information and the first application identification information. When determining that the first information that can be used to determine the second information does not exist, the first entity may first send the first application identification information and/or first indication information to the SMF network element. After receiving the first application identification information and/or the first indication information from the first entity, the SMF network element may send the first information to the first entity based on the first application identification information and/or the first indication information. In addition, the SMF network element may further send the second information to the first entity together with the first information. When the SMF network element does not send the second information to the first entity, after receiving the first information from the SMF network element, the first entity may determine the second information based on the first application identification information and the first information.

When the first entity sends the first indication information to the SMF network element, the SMF network element may determine the first information based on the current location of the terminal device, that is, may determine the first information based on the DNAI corresponding to the current location of the terminal device, or may determine the first information based on the fact that an area corresponding to DNAIs includes the DNAI of the current location of the terminal device. When the first entity sends the first application identification information to the SMF network element, the SMF network element may determine the first information based on the first application identification information, or may determine the first information based on the first application identification information and the current location of the terminal device. When the first entity sends the first application identification information and the first indication information to the SMF network element, the SMF network element may determine the first information based on the first application identification information and the current location of the terminal device.

In addition, the SMF network element may alternatively consider service subscription information of the terminal device, and may determine the first information based on an edge service that is subscribed to by the terminal device and that is in the service subscription information, that is, determine the first information based on application identification information in the service subscription information of the terminal device and the first application identification information.

When the first entity sends the first application identification information to the SMF network element, the first information may include the first application identification information. In addition, the first information may further include application identification information other than the first application identification information, DNAIs of data networks on which applications corresponding to the application identification information are deployed, and ECS options corresponding to the application identification information and the DNAIs or local DNS resolver addresses corresponding to the application identification information and the DNAIs. The application identification information may include one or more of the following:
(a) application identification information of some or all of applications deployed on a first data network, where the first data network is a data network that corresponds to the current location of the terminal device and on which an application corresponding to the first application identification information is deployed;
(b) application identification information of an application that is deployed on the first data network but not deployed on a second data network, where the second data network is a set of data networks that correspond to the current location of the terminal device and whose service scopes are included in the first data network;
(c) application identification information of some or all of applications deployed on the second data network; and
(d) application identification information of some or all of applications deployed on a third data network but not deployed on the first data network and the second data network, where the third data network is a set of data networks whose service scopes include the first data network.

For example, FIG. 6 is a schematic diagram of DNAI deployment according to an embodiment of this application. As shown in FIG. 6, a service scope of DNAI 3 is greater than a service scope of DNAI 1 and a service scope of DNAI 2. The service scope of DNAI 3 includes the service scope of DNAI 1 and the service scope of DNAI 2, but the service scope of DNAI 1 and the service scope of DNAI 2 are not overlapped. The following provides description by using an example in which the application identification information is an FQDN and the information associated with the current location of the terminal device is an ECS option. Service S1 and service S3 are deployed on DNAI 1. Service S1 corresponds to FQDN 1 and ECS option 1, and service 3 corresponds to FQDN 3 and ECS option 3. Service S2 is deployed on DNAI 2. Service S2 corresponds to FQDN 2 and ECS option 2. Services S3, S4, and S5 are deployed on DNAI 3. Service S3 corresponds to FQDN 3 and ECS option 3', service S4 corresponds to FQDN 4 and ECS option 4, and service S5 corresponds to FQDN 5 and ECS option 5. When the terminal device is currently in the service scope of DNAI 1 and the service scope of DNAI 3, after the SMF network element receives request information including FQDN 4 from the first entity, the SMF network element may send, to the first entity, FQDN 4 and ECS option 4 corresponding to FQDN 4 (or FQDN 4, DNAI 3, and ECS option 4 corresponding to FQDN 4 and DNAI 3). In addition, the SMF network element may further send one or more of the following information to the first entity:
(a) FQDN 3 and ECS option 3' corresponding to FQDN 3 (or FQDN 3, DNAI 3, and ECS option 3' corresponding to FQDN 3 and DNAI 3), and FQDN 5 and ECS option 5 corresponding to FQDN 5 (or FQDN 5, DNAI 3, and ECS option 5 corresponding to FQDN 5 and DNAI 3);
(b) FQDN 5 and ECS option 5 corresponding to FQDN 5 (or FQDN 5, DNAI 3, and ECS option 5 corresponding to FQDN 5 and DNAI 3);
(c) FQDN 1 and ECS option 1 corresponding to FQDN 1 (or FQDN 1, DNAI 1, and ECS option 1 corresponding to FQDN 1 and DNAI 1), and FQDN 3 and ECS option 3 corresponding to FQDN 3 (or FQDN 3, DNAI 1, and ECS option 3 corresponding to FQDN 3 and DNAI 1); and
(d) In FIG. 6, there is no data network whose service scope is larger than that of the data network corresponding to DNAI 3. Therefore, corresponding information cannot be determined based on the foregoing (d). The service scope of the data network may be a set of locations of all terminal devices that can access the data network.

When the terminal device is currently in the service scope of DNAI 1 and the service scope of DNAI 3, after the SMF network element receives request information including FQDN 1 from the first entity, the SMF network element may send, to the first entity, FQDN 1 and ECS option 1 corresponding to FQDN 1 (or FQDN 1, DNAI 1, and ECS option 1 corresponding to FQDN 1 and DNAI 1). In addition, the SMF network element may further send one or more of the following information to the first entity:
(a) FQDN 3 and ECS option 3 corresponding to FQDN 3 (or FQDN 3, DNAI 1, and ECS option 3 corresponding to FQDN 3 and DNAI 1);
(b) FQDN 3 and ECS option 3 corresponding to FQDN 3 (or FQDN 3, DNAI 1, and ECS option 3 corresponding to FQDN 3 and DNAI 1);
(c) In FIG. 6, there is no data network whose service scope is smaller than that of the data network corresponding to DNAI 1. Therefore, corresponding information cannot be determined based on the foregoing (c); and
(d) FQDN 4 and ECS option 4 corresponding to FQDN 4 (or FQDN 4, DNAI 3, and ECS option 4 corresponding to FQDN 4 and DNAI 3), and FQDN 5 and ECS option 5 corresponding to FQDN 5 (or FQDN 5, DNAI 3, and ECS option 5 corresponding to FQDN 5 and DNAI 3).

The SMF network element may configure or obtain an area corresponding to the DNAI, that is, a service scope of the DNAI. The service scope of the DNAI may be a specific location set, for example, a set of one or more of a tracking area (tracking area, TA) 1, a TA 2, ...; a RAN_1 and a RAN_2; a cell (Cell)_1 and a Cell_2; or the like. Alternatively, the service scope of the DNAI may be a set of pieces of geographical location information, for example, a longitude and a latitude, or an administrative region. Alternatively, the service scope of the DNAI may be a set of service scopes of one or more UPF network elements corresponding to the DNAI. The one or more UPF network elements may serve the data network. The service scope of the UPF network element may be a specific location set or a set of pieces of geographical location information. Alternatively, the service scope of the DNAI may be identified by a service scope of an application server (application server, AS) and/or an enabler server (enabler server, ES) deployed on the data network. A representation form of the service scope of the AS or the ES is the same as that described above, and details are not described again. Alternatively, the service scope of the DNAI may be a set of locations of terminal devices that access a data network corresponding to the DNAI.

When the PDU session is established or the DNAI corresponding to the terminal device changes, the SMF network element may send a second identifier to the first entity. The second identifier is a DNAI corresponding to the current location of the terminal device. The first entity may determine the second information based on the first application identification information, the second identifier, and the first information. The first entity may first search for or match first information including the first application identification information from the first information obtained by the SMF network element, and then may obtain, from the found or matched first information, the second information corresponding to the first application identification information and the second identifier.

In a case, which information about a terminal device is transmitted may be determined by using the PDU session during interaction between the first entity and the SMF network element. In another case, information transmitted between the first entity and the SMF network element and for the terminal device may include an identifier of the terminal device, so that information of a terminal device that is transmitted can be determined based on the identifier of the terminal device.

503: The first entity sends DNS request information to a central DNS server or the local DNS resolver based on the second information.

Correspondingly, the central DNS server or the local DNS resolver receives the DNS request information from the first entity. The DNS request information is used to obtain address information of an application server, that is, address information of an application server on which an application corresponding to the first application identification information is deployed.

After the first entity determines the second information based on the first application identification information and the first information obtained from the SMF network element, when the second information is the ECS option, the first entity may send the DNS request information to the central DNS server. The DNS request may further include the second information. In a case that the first request information is the DNS request information, compared with the first request information, the DNS request information sent by the first entity to the central DNS server further includes the second information in addition to the first application identification information.

When the second information is the address information of the local DNS resolver, the first entity may send the DNS request information to the local DNS resolver. In a case that the first request information is the DNS request information, the DNS request information sent by the first entity to the local DNS resolver is the same as the first request information.

For detailed descriptions of the central DNS server and the local DNS resolver, refer to related descriptions corresponding to FIG. 4.

After the SMF network element sends the first information to the first entity, when sensing that the DNAI corresponding to the terminal device changes, the SMF network element may send second indication information and a fourth identifier to the first entity. Correspondingly, the first entity may receive the second indication information and the fourth identifier from the SMF network element, and then delete, based on the second indication information, information corresponding to the fourth identifier from the first information. The fourth identifier is a DNAI of a data network that no longer serves the terminal device, and the first identifier may include the fourth identifier. For example, when the fourth identifier is DNAI 1 in Table 3, the first entity may delete DNAI 1 from the first information, application identification information corresponding to DNAI 1, and the fourth information.

The SMF network element may send the second indication information, the fourth identifier, and a fifth identifier to the first entity. The fifth identifier is application identification information of an application deployed on a data network corresponding to the fourth identifier. The first entity may delete, based on the second indication information, information corresponding to the fourth identifier and the fifth identifier from the first information. For example, when the fourth identifier is DNAI 1 in Table 3, and the fifth identifier is application 1 in Table 3, the first entity deletes information 1 corresponding to DNAI 1 and application 1.

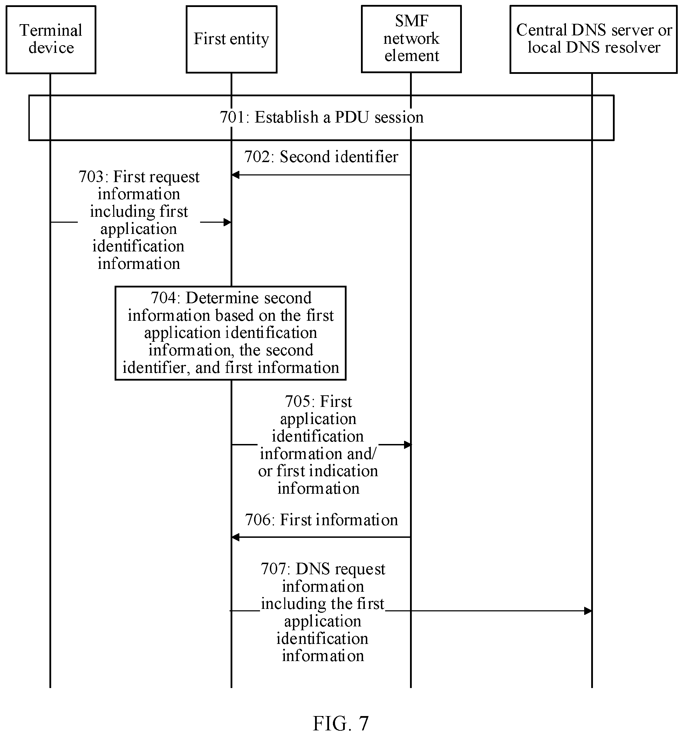

Based on the foregoing network architecture, FIG. 7 is a schematic flowchart of another communication method according to an embodiment of this application. As shown in FIG. 7, the communication method may include the following steps.

701: A terminal device establishes a PDU session.

702: An SMF network element sends a second identifier to a first entity.

Correspondingly, the first entity receives the second identifier from the SMF network element.

When the PDU session associated with the terminal device is established or the SMF network element senses that a DNAI corresponding to the terminal device changes, the SMF network element may send the second identifier to the first entity. That the DNAI corresponding to the terminal device changes may mean that all or some of the DNAIs corresponding to the terminal device change.

In a case, when an MEC deployment status changes, an AF network element may send a notification to the SMF network element. After receiving the notification from the AF network element, the SMF network element may sense a current MEC deployment status based on the notification. In another case, the SMF network element may sense a current location of the terminal device by using an AMF network element and/or a location management function (location management function, LMF) network element, and then may determine a DNAI corresponding to the current location of the terminal device. In other words, a corresponding area includes the DNAI corresponding to the current location of the terminal device. A location of the terminal device may be identified by using a TA, a cell ID, or the like.

The SMF network element may send the second identifier to the first entity by using signaling, a message, or the like. For example, when the first entity is a UPF network element or is deployed on the UPF network element, the SMF network element may send the second identifier to the first entity by using N4 session modification (Session Modification) signaling. When the first entity is an independent network element or device, the SMF network element may send the second identifier to the first entity by using Nsmf_EventExposure_Notify signaling. The foregoing is merely an example used to illustrate that the SMF network element sends the second identifier to the first entity by using signaling, a message, or the like, and does not constitute a limitation thereto.

703: The terminal device sends first request information including first application identification information to the first entity.

Correspondingly, the first entity receives the first request information from the terminal device.

704: The first entity determines second information based on the first application identification information, the second identifier, and first information.

After receiving the first request information from the terminal device, the first entity may determine the second information based on the first application identification information, the second identifier, and the first information. When the first entity fails to determine the second information, to be specific, the first entity does not include the first information or the existing first information does not include information required for determining the second information, step 705 and step 706 may be performed first. When the second information can be directly received through step 706, the first entity may not perform step 704. When the second information cannot be received through step 706, the first entity further needs to perform step 704 again, and then may perform step 707.

705: The first entity sends the first application identification information and/or first indication information to the SMF network element.

Correspondingly, the SMF network element receives the first application identification information and/or the first indication information from the first entity.

When the first entity sends the first application identification information and the first indication information to the SMF network element, the first application identification information and the first indication information may be sent by using same signaling, a same message, or the like. For example, when the first entity is a UPF network element or is deployed on the UPF network element, the first entity may send the first application identification information and the first indication information to the SMF network element by using an N4 report message (report message). When the first entity is an independent network element or device, the first entity may send the first application identification information and the first indication information to the SMF network element by using Nsmf_EventExposure_AppRelocationInfo, or may first send an AF request (AFrequest) to a PCF network element, and then the PCF network element may send Npcf_SMPolicyControl_Update Request to the SMF network element. The AF request and the Npcf_SMPolicyControl_Update Request include the first application identification information and the first indication information. When sending information to the SMF network element, the first entity may directly communicate with the SMF network element, or may communicate with the SMF network element by using another network element or device such as an NEF network element or the PCF network element. The foregoing is merely an example used to illustrate that the first entity sends the first application identification information and the first indication information to the SMF network element by using signaling, a message, or the like, and does not constitute a limitation thereto.

706: The SMF network element sends the first information to the first entity based on the first application identification information and/or the first indication information.

Correspondingly, the first entity receives the first information from the SMF network element.

The SMF network element may send the first information to the first entity by using signaling, a message, or the like. For example, when the N4 report message is used in step 704, the SMF network element may send the first information to the first entity by using an N4 report Ack message. When the Nsmf_EventExposure_AppRelocationInfo is used in step 704 or the first information is forwarded via the PCF network element, the SMF network element may send the first information to the first entity by using Nsmf_EventExposure_Notify. The foregoing is merely an example used to illustrate that the SMF network element sends the first information to the first entity by using signaling, a message, or the like, and does not constitute a limitation thereto.

It should be understood that the first information sent in step 705 is applicable to all terminal devices that can be served by the first entity.

707: The first entity sends DNS request information to a central DNS server or a local DNS resolver based on the second information.

Correspondingly, the central DNS server or the local DNS resolver receives the DNS request information from the first entity.

After the first entity sends the DNS request information to the central DNS server or the local DNS resolver based on the second information, the remaining EAS discovery procedure may continue to be performed.

The first entity may delete a part or all of the first information according to a specific condition or rule at any time or triggered by any specific condition. For example, the specific condition or rule may be that the deletion is performed periodically, or the remaining storage space is less than a first threshold, or a storage time of information is greater than or equal to a second threshold.

For detailed descriptions of step 701 to step 707, refer to the foregoing related descriptions. Details are not described herein again.

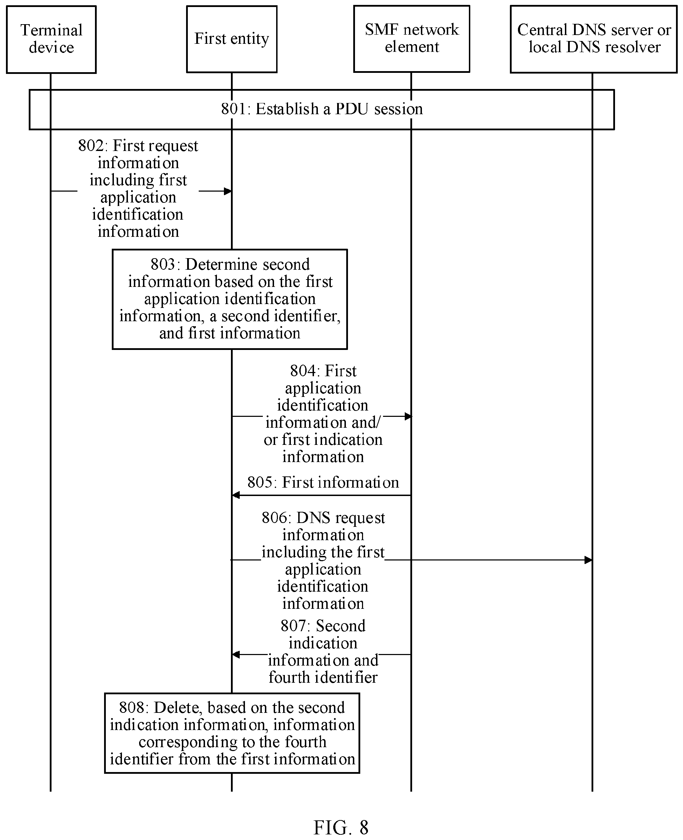

Based on the foregoing network architecture, FIG. 8 is a schematic flowchart of still another communication method according to an embodiment of this application. As shown in FIG. 8, the communication method may include the following steps.

801: A terminal device establishes a PDU session.

802: The terminal device sends first request information including first application identification information to a first entity.

Correspondingly, the first entity receives the first request information from the terminal device.

803: The first entity determines second information based on the first application identification information and first information.

After receiving the first request information from the terminal device, the first entity may determine the second information based on the first application identification information and the first information. When the first entity fails to determine the second information, to be specific, the first entity does not include the first information or the existing first information does not include information required for determining the second information, step 804 and step 805 may be performed first. When the second information can be directly received through step 805, the first entity may not perform step 803. When the second information cannot be received through step 805, the first entity further needs to perform step 803 again.

804: The first entity sends the first application identification information and/or first indication information to an SMF network element.

Correspondingly, the SMF network element receives the first application identification information and/or the first indication information from the first entity.

805: The SMF network element sends the first information to the first entity based on the first application identification information and/or the first indication information.

Correspondingly, the first entity receives the first information from the SMF network element.

The first information sent in step 805 may be used as a basis for determining the second information only when request information including application identification information is received from the terminal device, and cannot be used as a basis for determining the second information when request information including application identification information is received from another terminal device. In other words, the first information can serve only a corresponding terminal device, but cannot serve another terminal device. Therefore, after receiving the first information, the first entity may establish a relationship between the first information and the terminal device.

806: The first entity sends DNS request information to a central DNS server or a local DNS resolver based on the second information.

Correspondingly, the central DNS server or the local DNS resolver receives the DNS request information from the first entity.

807: The SMF network element sends second indication information and a fourth identifier to the first entity.

Correspondingly, the first entity receives the second indication information and the fourth identifier from the SMF network element.

When sensing that a DNAI corresponding to the terminal device changes, the SMF network element may send the second indication information and the fourth identifier to the first entity, or may send the second indication information, the fourth identifier, and a fifth identifier to the first entity.

It should be understood that, because MEC platform deployment statuses are different, when the terminal device is located at a same location, corresponding DNAIs may be different for different services. When a location of the terminal device does not change but services change, if only some services change, the SMF network element may send the second indication information, the fourth identifier, and the fifth identifier to the first entity. If all services change, the SMF network element may send the second indication information and the fourth identifier to the first entity. Different services correspond to different application identification information.

808: The first entity deletes, based on the second indication information, information corresponding to the fourth identifier from the first information.

The first entity may delete, based on the second indication information, the information corresponding to the fourth identifier from the first information, or may delete, based on the second indication information, information corresponding to the fourth identifier and the fifth identifier from the first information.

For example, if the terminal device is in the service scope of DNAI 1 in FIG. 6, when the terminal device moves from the service scope of DNAI 1 to the service scope of DNAI 2, because the terminal device is still in the service scope of DNAI 3, the fourth identifier is DNAI 1, and the first entity may delete DNAI 1, an FQDN corresponding to DNAI 1, and an ECS option corresponding to DNAI 1 from the first information corresponding to the terminal device, for example, FQDN 1 and ECS option 1 corresponding to FQDN 1 (or FQDN 1, DNAI 1, and ECS option 1 corresponding to FQDN 1 and DNAI 1), and FQDN 3 and ECS option 3 corresponding to FQDN 3 (or FQDN 3, DNAI 1, and ECS option 3 corresponding to FQDN 3 and DNAI 1).

For detailed descriptions of step 801 to step 808, refer to the foregoing related descriptions. Details are not described herein again.

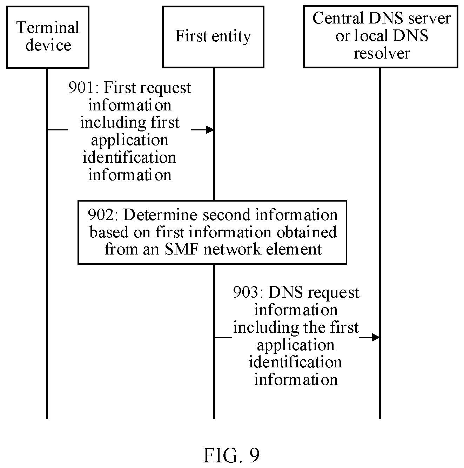

Based on the foregoing network architecture, FIG. 9 is a schematic flowchart of still another communication method according to an embodiment of this application. As shown in FIG. 9, the communication method may include the following steps.

901: A terminal device sends first request information including first application identification information to a first entity.

Correspondingly, the first entity receives, from the terminal device, the first request information including the first application identification information.

Step 901 is the same as step 501. For detailed descriptions, refer to step 501.

902: The first entity determines second information based on first information obtained from an SMF network element.

After receiving the first request information from the terminal device, the first entity may determine the second information based on the first information obtained from the SMF network element. The second information is an ECS option corresponding to a first identifier or address information of a local DNS resolver corresponding to a first identifier. The first identifier is a DNAI of a data network with a smallest service scope, closest to the terminal device, or that can reflect a most accurate location of the terminal device in data networks corresponding to a second identifier. The second identifier is at least one DNAI corresponding to a current location of the terminal device. The first identifier may be the DNAI of the data network with a smallest service scope in the data networks corresponding to the second identifier, or may be the DNAI of the data network closest to the terminal device, or may be the DNAI of the data network that can reflect the most accurate location of the terminal device.

In an implementation, the first information may include the second information. It can be learned that the first information may include only the ECS option or the address information of the local domain name system DNS resolver.

In another implementation, the first information may include the first application identification information and the second information corresponding to the first application identification information. The first information may further include a third identifier and third information corresponding to the third identifier. The third identifier is application identification information of an application deployed on a data network corresponding to the second identifier, and the third information is an ECS option corresponding to the third identifier or address information of a local DNS resolver corresponding to the third identifier.

When it is assumed that the second information is related only to the first identifier, the first information includes only the ECS option or the address information of the local domain name system DNS resolver. When the foregoing assumption does not exist, the first information may include application identification information and an ECS option or address information of a local DNS resolver corresponding to the application identification information.

It should be understood that the first information may be used only by the terminal device as a basis for determining the second information, and cannot be used by another terminal device.

For other detailed descriptions of step 902, refer to related descriptions in step 502.

903: The first entity sends DNS request information to a central DNS server or the local DNS resolver.

Step 903 is the same as step 503. For detailed descriptions, refer to step 503.

After the SMF network element sends the first information to the first entity, when sensing that a first identifier corresponding to the current location of the terminal device changes, the SMF network element may send second indication information to the first entity. Correspondingly, the first entity may receive the second indication information from the SMF network element, and then delete the first information based on the second indication information, that is, delete the first information corresponding to the terminal device.

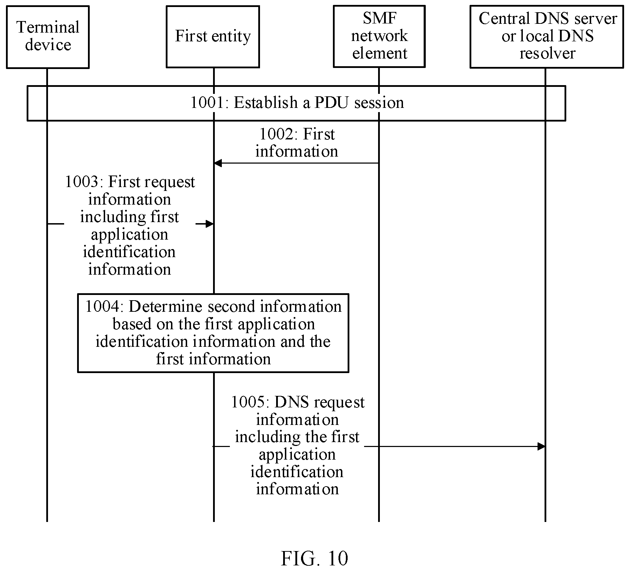

Based on the foregoing network architecture, FIG. 10 is a schematic flowchart of still another communication method according to an embodiment of this application. As shown in FIG. 10, the communication method may include the following steps.

1001: A terminal device establishes a PDU session.

1002: An SMF network element sends first information to a first entity.

In an implementation, the first information may include second information. In another implementation, the first information may include first application identification information and the second information corresponding to the first application identification information. The first information may further include a third identifier and third information corresponding to the third identifier. The third identifier is application identification information of an application deployed on a data network corresponding to a second identifier, and the third information is an ECS option corresponding to the third identifier or address information of a local DNS resolver corresponding to the third identifier. For detailed descriptions of the first information, refer to related descriptions in step 902.

Step 1002 is similar to step 702. For detailed descriptions, refer to step 702. A difference lies in that: in step 702, sending is performed when changing of the DNAI corresponding to the terminal device is sensed, while in step 1002, sending is performed when changing of a first identifier corresponding to a current location of the terminal device is sensed.

For example, when the terminal device moves from the service scope of DNAI 1 to the service scope of DNAI 2 in FIG. 6, and DNAI 2 is a DNAI of a data network with a smallest service scope, closest to the terminal device, or that can reflect a most accurate location of the terminal device in DNAIs corresponding to the terminal device, the SMF network element may send ECS option 2 (or FQDN 2 and ECS option 2 corresponding to FQDN 2) to the first entity. When the SMF network element sends FQDN 2 and ECS option 2 corresponding to FQDN 2 to the first entity, the SMF network element may further send, to the first entity, FQDN 3 and ECS option 3' corresponding to FQDN 3, FQDN 4 and ECS option 4 corresponding to FQDN 4, and FQDN 3 and ECS option 5 corresponding to

FQDN3.

It should be understood that when the foregoing assumption is met, and second information corresponding to DNAI 1 and DNAI 2 is the same, when the SMF network element senses that the first identifier corresponding to the current location of the terminal device changes from DNAI 1 to DNAI 2, because first information existing in the first entity is the same as the first information to be sent, the SMF network element may not repeatedly send the first information to the first entity, so that unnecessary information transmission can be reduced, thereby saving transmission resources.

It should be understood that when the foregoing assumption is not met, and applications deployed on data networks corresponding to DNAI 1 and DNAI 2 are the same, and second information corresponding to each of the applications is also the same, when the SMF network element senses that the first identifier corresponding to the current location of the terminal device changes from DNAI 1 to DNAI 2, because first information existing in the first entity is the same as the first information to be sent, the SMF network element may not repeatedly send the first information to the first entity, so that unnecessary information transmission can be reduced, thereby saving transmission resources.

In addition, service subscription information of the terminal device may alternatively be considered, and the first information may be determined based on an edge service that is subscribed to by the terminal device and that is in the service subscription information, in other words, the first information is determined based on application identification information in the service subscription information of the terminal device.

It should be understood that the first information may be used only by the terminal device as a basis for determining the second information, and cannot be used by another terminal device.

1003: The terminal device sends first request information including the first application identification information to the first entity.

Correspondingly, the first entity receives the first request information from the terminal device.

1004: The first entity determines the second information based on the first application identification information and the first information.

After receiving the first request information from the terminal device, the first entity may determine the second information based on first information latest obtained from the first information that is of the terminal device and that is received from the SMF network element and the first application identification information. The second information is an ECS option corresponding to a first identifier or address information of a local DNS resolver corresponding to a first identifier. The first identifier is a DNAI of a data network with a smallest service scope, closest to the terminal device, or that can reflect a most accurate location of the terminal device in data networks corresponding to a second identifier. The second identifier is at least one DNAI corresponding to the current location of the terminal device.

1005: The first entity sends DNS request information to a central DNS server or the local DNS resolver based on the second information.

Correspondingly, the central DNS server or the local DNS resolver receives the DNS request information from the first entity.

Step 1005 is similar to step 707. For detailed descriptions, refer to step 707.

For detailed descriptions of step 1001 to step 1005, refer to the foregoing related descriptions. Details are not described herein again.

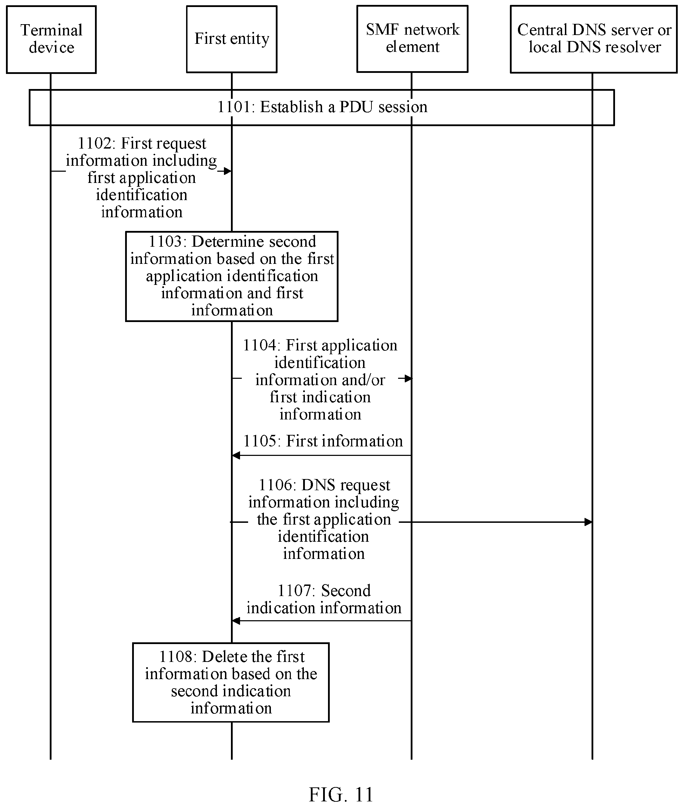

Based on the foregoing network architecture, FIG. 11 is a schematic flowchart of still another communication method according to an embodiment of this application. As shown in FIG. 11, the communication method may include the following steps.

1101: A terminal device establishes a PDU session.

1102: The terminal device sends first request information including first application identification information to a first entity.

Correspondingly, the first entity receives the first request information from the terminal device.

1103: The first entity determines second information based on the first application identification information and first information.

The second information is an ECS option corresponding to a first identifier or address information of a local DNS resolver corresponding to a first identifier. The first identifier is a DNAI of a data network with a smallest service scope, closest to the terminal device, or that can reflect a most accurate location of the terminal device in data networks corresponding to a second identifier. The second identifier is at least one DNAI corresponding to a current location of the terminal device.

After receiving the first request information from the terminal device, the first entity may determine the second information based on the first application identification information and the first information. When the first entity fails to determine the second information, to be specific, the first entity does not include the first information or the existing first information does not include information required for determining the second information, step 1104 and step 1105 may be performed first. When the second information can be directly received through step 1105, the first entity may not perform step 1103. When the second information cannot be received through step 1105, the first entity further needs to perform step 1103 again.

1104: The first entity sends the first application identification information and/or first indication information to the SMF network element.

Correspondingly, the SMF network element receives the first application identification information and/or the first indication information from the first entity.

1105: The SMF network element sends the first information to the first entity based on the first application identification information and/or the first indication information.

Correspondingly, the first entity receives the first information from the SMF network element.

The first information sent in step 1105 is useful only for the terminal device, and is useless for another terminal device. Therefore, after receiving the first information, the first entity may establish a relationship between the first information and the terminal device.

In an implementation, the first information may include the second information. In another implementation, the first information may include the first application identification information and the second information corresponding to the first application identification information. The first information may further include a third identifier and third information corresponding to the third identifier. The third identifier is application identification information of an application deployed on a data network corresponding to the second identifier, and the third information is an ECS option corresponding to the third identifier address information of a local DNS resolver corresponding to the third identifier.

1106: The first entity sends DNS request information to a central DNS server or the local DNS resolver based on the second information.

Correspondingly, the central DNS server or the local DNS resolver receives the DNS request information from the first entity.

1107: The SMF network element sends second indication information to the first entity.

Correspondingly, the first entity receives the second indication information from the SMF network element.

When sensing that a first identifier corresponding to the terminal device changes, the SMF network element may send the second indication information to the first entity.

1108: The first entity deletes the first information based on the second indication information.

The first entity may delete the first information based on the second indication information, that is, delete the first information corresponding to the terminal device.

For detailed descriptions of step 1101 to step 1108, refer to the foregoing related descriptions. Details are not described herein again.

It should be understood that in the communication method, a function performed by the terminal device may alternatively be performed by a module (for example, a chip) in the terminal device, a function performed by the first entity may alternatively be performed by a module (for example, a chip) in the first entity, a function performed by the SMF network element may alternatively be performed by a module (for example, a chip) in the SMF network element, and a function performed by the DNS server may alternatively be performed by a module (for example, a chip) in the DNS server, a function performed by the DNS resolver may alternatively be performed by a module (for example, a chip) in the DNS resolver.

It should be understood that the SMF network element in the communication method may be replaced with another mobile network control plane network element or device.

It should be understood that related information in the foregoing different embodiments may be mutually referenced.

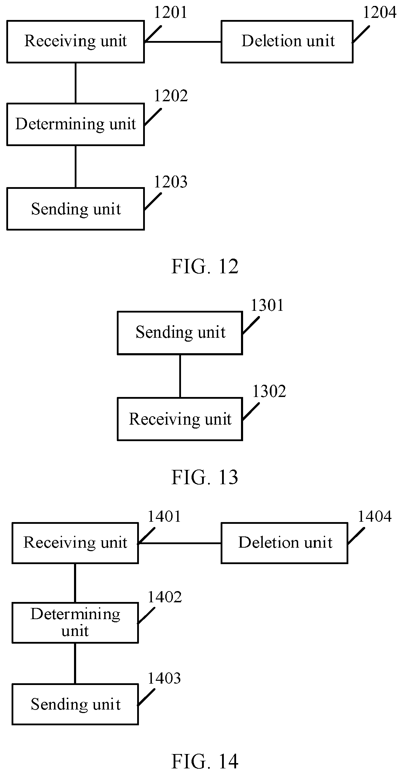

Based on the foregoing network architecture, FIG. 12 is a schematic diagram of a structure of a communication apparatus according to an embodiment of this application. As shown in FIG. 12, the communication apparatus may include:
a receiving unit 1201, configured to receive first request information from a terminal device, where the first request information includes first application identification information;
a determining unit 1202, configured to determine second information based on the first application identification information and first information obtained from a session network function network element, where the second information is an ECS option or address information of a local DNS resolver; and
a sending unit 1203, configured to send DNS request information to a central DNS server or the local DNS resolver based on the second information, where the DNS request information includes the first application identification information, and the DNS request information is used to obtain address information of an application server.

In an embodiment, the receiving unit 1201 is further configured to receive the first information from the session management function network element, where the first information includes the first application identification information and the second information corresponding to the first application identification information.

In an embodiment, the receiving unit 1201 is further configured to receive the first information from the session management function network element, where the first information includes the first application identification information, a first identifier, and the second information corresponding to the first application identification information and the first identifier, and the first identifier is at least one data network access identifier.

In an embodiment, the receiving unit 1201 is further configured to receive a second identifier from the session management function network element, where the second identifier is a data network access identifier corresponding to a current location of the terminal device.

The determining unit 1202 is specifically configured to determine the second information based on the first application identification information, the second identifier, and the first information obtained from the session network function network element.

In an embodiment, the sending unit 1203 is further configured to: before the receiving unit receives the first information from the session management function network element, send the first application identification information and/or first indication information to the session management function network element, where the first application identification information is used to obtain the first information, and the first indication information indicates the session management function network element to send the first information.

In an embodiment, the first information further includes a third identifier, the first identifier, and third information corresponding to the first identifier and the third identifier. The third identifier is application identification information of an application deployed on a data network corresponding to the first identifier. The third information is an ECS option corresponding to the third identifier or address information of a local DNS resolver corresponding to the third identifier.

In an embodiment, the first information further includes a third identifier and third information corresponding to the third identifier. The third identifier is application identification information of an application deployed on a data network corresponding to the first identifier. The third information is an ECS option corresponding to the third identifier or address information of a local DNS resolver corresponding to the third identifier.

In an embodiment, the receiving unit 1201 is further configured to receive second indication information and a fourth identifier from the session management function network element, where the fourth identifier is a data network access identifier of a data network that no longer serves the terminal device, and the first identifier includes the fourth identifier.

The communication apparatus may further include:
a deletion unit 1204, configured to delete, based on the second indication information, information corresponding to the fourth identifier from the first information.

In an embodiment, that the receiving unit 1201 receives second indication information and a fourth identifier from the session management function network element includes:
receiving the second indication information, the fourth identifier, and a fifth identifier from the session management function network element, where the fifth identifier is application identification information of an application deployed on a data network corresponding to the fourth identifier.

The deletion unit 1204 is specifically configured to delete information corresponding to the fourth identifier and the fifth identifier from the first information.

In an embodiment, that the sending unit 1203 sends DNS request information to a central DNS server or the local DNS resolver based on the second information includes:
when the second information is the ECS option, sending the DNS request information to the central DNS server, where the DNS request further includes the second information; or
when the second information is the address information of the local DNS resolver, sending the DNS request information to the local DNS resolver.

For more detailed descriptions of the receiving unit 1201, the determining unit 1202, the sending unit 1203, and the deletion unit 1204, directly refer to related descriptions of the first entity in the method embodiments shown in FIG. 5, FIG. 7, and FIG. 8. Details are not described herein again.

Based on the foregoing network architecture, FIG. 13 is a schematic diagram of a structure of another communication apparatus according to an embodiment of this application. As shown in FIG. 13, the communication apparatus may include:
a sending unit 1301, configured to send first information to a first entity, where the first information includes first application identification information and second information corresponding to the first application identification information, or includes first application identification information, a first identifier, and second information corresponding to the first application identification information and the first identifier, where the first identifier is at least one data network access identifier, the second information is an ECS option or address information of a local DNS resolver, and the first information is used by the first entity to determine the second information.

In an embodiment, the sending unit 1301 is further configured to send a second identifier to the first entity, where the second identifier is a data network access identifier corresponding to a current location of a terminal device.

That the first information is used to determine the second information includes:
the first information and the second identifier are used to determine the second information.

In an embodiment, the communication apparatus may further include:
a receiving unit 1302, configured to receive the first application identification information and/or first indication information from the first entity.

That the sending unit 1301 sends first information to a first entity includes:
sending the first information to the first entity based on the first application identification information and/or the first indication information.

In an embodiment, the first information further includes a third identifier, the first identifier, and third information corresponding to the first identifier and the third identifier. The third identifier is application identification information of an application deployed on a data network corresponding to the first identifier. The third information is an ECS option corresponding to the third identifier or address information of a local DNS resolver corresponding to the third identifier.

In an embodiment, the first information further includes a third identifier and third information corresponding to the third identifier. The third identifier is application identification information of an application deployed on a data network corresponding to the first identifier. The third information is a client subnet option corresponding to the third identifier or address information of a local DNS resolver corresponding to the third identifier.

In an embodiment, the sending unit 1301 is further configured to send second indication information and a fourth identifier to the first entity, where the fourth identifier is a data network access identifier of a data network that no longer serves the terminal device, the first identifier includes the fourth identifier, and the second indication information is used to delete information corresponding to the fourth identifier from the first information.

In an embodiment, that the sending unit 1301 sends second indication information and a fourth identifier to the first entity includes:
sending the second indication information, the fourth identifier, and a fifth identifier to the first entity, where the fifth identifier is application identification information of an application deployed on a data network corresponding to the fourth identifier.

That the second indication information is used to delete information corresponding to the fourth identifier from the first information includes:
the second indication information is used to delete information corresponding to the fourth identifier and the fifth identifier from the first information.

For more detailed descriptions of the sending unit 1301 and the receiving unit 1302, directly refer to related descriptions of the SMF network element in the method embodiments shown in FIG. 5, FIG. 7, and FIG. 8. Details are not described herein again.

Based on the foregoing network architecture, FIG. 14 is a schematic diagram of a structure of still another communication apparatus according to an embodiment of this application. As shown in FIG. 14, the communication apparatus may include:
a receiving unit 1401, configured to receive first request information from a terminal device, where the first request information includes first application identification information;
a determining unit 1402, configured to determine second information based on first information obtained from a session management function network element, where the second information is an ECS option corresponding to a first identifier or address information of a local DNS resolver corresponding to a first identifier, the first identifier is a data network access identifier of a data network with a smallest service scope or closest to the terminal device in data networks corresponding to a second identifier, and the second identifier is at least one data network access identifier corresponding to a current location of the terminal device; and
a sending unit 1403, configured to send DNS request information to a central DNS server or the local DNS resolver based on the second information, where the DNS request information includes the first application identification information, and the DNS request information is used to obtain address information of an application server.

In an embodiment, the receiving unit 1401 is further configured to receive the first information from the session management function network element, where the first information includes the second information.

In an embodiment, the receiving unit 1401 is further configured to receive the first information from the session management function network element, where the first information includes the first application identification information and the second information corresponding to the first application identification information.

In an embodiment, the first information further includes a third identifier and third information corresponding to the third identifier. The third identifier is application identification information of an application deployed on a data network corresponding to the second identifier. The third information is an ECS option corresponding to the third identifier or address information of a local DNS resolver corresponding to the third identifier.

In an embodiment, the sending unit 1403 is further configured to send the first application identification information and/or first indication information to the session management function network element, where the first application identification information is used to obtain the first information, and the first indication information indicates the session management function network element to send the first information.

In an embodiment, the receiving unit 1401 is further configured to receive second indication information from the session management function network element, where the second indication information indicates to delete the first information.

The communication apparatus may further include:
a deletion unit 1404, configured to delete the first information based on the second indication information.

In an embodiment, that the sending unit 1403 sends DNS request information to a central DNS server or the local DNS resolver based on the second information includes:
when the second information is the ECS option, sending the DNS request information to the central DNS server, where the DNS request further includes the second information; or
when the second information is the address information of the local DNS resolver, sending the DNS request information to the local DNS resolver.

For more detailed descriptions of the receiving unit 1401, the determining unit 1402, the sending unit 1403, and the deletion unit 1404, directly refer to related descriptions of the first entity in the method embodiments shown in FIG. 9 to FIG. 11. Details are not described herein again.

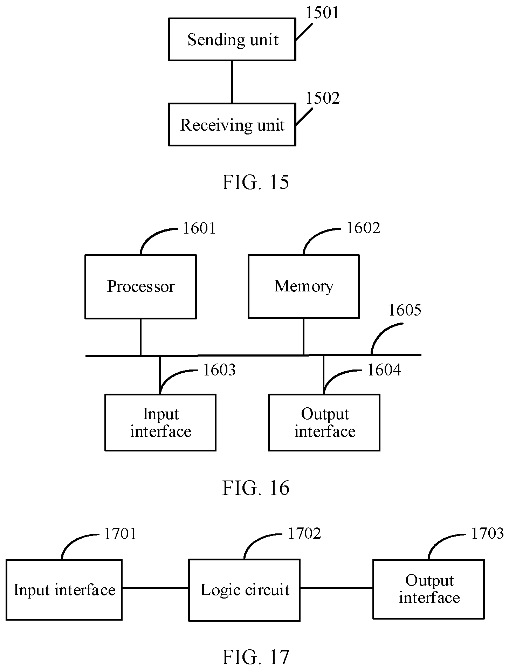

Based on the foregoing network architecture, FIG. 15 is a schematic diagram of a structure of still another communication apparatus according to an embodiment of this application. As shown in FIG. 15, the communication apparatus may include:
a sending unit 1501, configured to send first information to a first entity, where the first information includes second information, or includes first application identification information and second information corresponding to the first application identification information, the second information is an ECS option corresponding to a first identifier or address information of a local DNS resolver corresponding to a first identifier, the first identifier is a data network access identifier of a data network with a smallest service scope or closest to a terminal device in data networks corresponding to a second identifier, the second identifier is at least one data network access identifier corresponding to a current location of the terminal device, and the first information is used to determine the second information.

In an embodiment, the first information further includes a third identifier and third information corresponding to the third identifier. The third identifier is application identification information of an application deployed on a data network corresponding to the second identifier. The third information is an ECS option corresponding to the third identifier or address information of a local DNS resolver corresponding to the third identifier.

In an embodiment, the communication apparatus may further include:
a receiving unit 1502, configured to receive the first application identification information and/or first indication information from the first entity.

The sending unit 1501 is specifically configured to send the first information to the first entity based on the first application identification information and/or the first indication information.

In an embodiment, the sending unit 1501 is further configured to send second indication information to the first entity, where the second indication information indicates to delete the first information.

For more detailed descriptions of the sending unit 1501 and the receiving unit 1502, directly refer to related descriptions of the SMF network element in the method embodiments shown in FIG. 9 to FIG. 11. Details are not described herein again.

Based on the foregoing network architecture, FIG. 16 is a schematic diagram of a structure of still another communication apparatus according to an embodiment of this application. As shown in FIG. 16, the communication apparatus may include a processor 1601, a memory 1602, an input interface 1603, an output interface 1604, and a bus 1605. The memory 1602 may exist independently, and may be connected to the processor 1601 through the bus 1605. Alternatively, the memory 1602 may be integrated with the processor 1601. The bus 1605 is configured to connect these components.

In an embodiment, the communication apparatus may be a first entity or a module (for example, a chip) in the first entity. When computer program instructions stored in the memory 1602 are executed, the processor 1601 is configured to control the receiving unit 1201 and the sending unit 1203 to perform the operations performed in the foregoing embodiment. The processor 1601 is further configured to perform the operations performed by the determining unit 1202 and the deletion unit 1204 in the foregoing embodiment. The input interface 1603 is configured to perform the operations performed by the receiving unit 1201 in the foregoing embodiment. The output interface 1604 is configured to perform the operations performed by the sending unit 1203 in the foregoing embodiment. The first entity or the module in the first entity may be further configured to perform various methods performed by the first entity in the method embodiments in FIG. 5, FIG. 7, and FIG. 8. Details are not described again.

In an embodiment, the communication apparatus may be an SMF network element or a module (for example, a chip) in the SMF network element. When computer program instructions stored in the memory 1602 are executed, the processor 1601 is configured to control the sending unit 1301 and the receiving unit 1302 to perform the operations performed in the foregoing embodiment. The input interface 1603 is configured to perform the operations performed by the receiving unit 1302 in the foregoing embodiment. The output interface 1604 is configured to perform the operations performed by the sending unit 1301 in the foregoing embodiment. The SMF network element or the module in the SMF network element may be further configured to perform various methods performed by the SMF network element in the method embodiments in FIG. 5, FIG. 7, and FIG. 8. Details are not described again.

In an embodiment, the communication apparatus may be a first entity or a module (for example, a chip) in the first entity. When computer program instructions stored in the memory 1602 are executed, the processor 1601 is configured to control the receiving unit 1401 and the sending unit 1403 to perform the operations performed in the foregoing embodiment. The processor 1601 is further configured to perform the operations performed by the determining unit 1402 and the deletion unit 1404 in the foregoing embodiment. The input interface 1603 is configured to perform the operations performed by the receiving unit 1401 in the foregoing embodiment. The output interface 1604 is configured to perform the operations performed by the sending unit 1403 in the foregoing embodiment. The first entity or the module in the first entity may be further configured to perform various methods performed by the first entity in the method embodiments in FIG. 9 to FIG. 11. Details are not described again.

In an embodiment, the communication apparatus may be an SMF network element or a module (for example, a chip) in the SMF network element. When computer program instructions stored in the memory 1602 are executed, the processor 1601 is configured to control the sending unit 1501 and the receiving unit 1502 to perform the operations performed in the foregoing embodiment. The input interface 1603 is configured to perform the operations performed by the receiving unit 1502 in the foregoing embodiment. The output interface 1604 is configured to perform the operations performed by the sending unit 1501 in the foregoing embodiment. The SMF network element or the module in the SMF network element may be further configured to perform various methods performed by the SMF network element in the method embodiments in FIG. 9 to FIG. 11. Details are not described again.

Based on the foregoing network architecture, FIG. 17 is a schematic diagram of a structure of still another communication apparatus according to an embodiment of this application. As shown in FIG. 17, the communication apparatus may include an input interface 1701, a logic circuit 1702, and an output interface 1703. The input interface 1701 is connected to the output interface 1703 via the logic circuit 1702. The input interface 1701 is configured to receive information from another communication apparatus, and the output interface 1703 is configured to output, schedule, or send information to the another communication apparatus. The logic circuit 1702 is configured to perform an operation other than operations of the input interface 1701 and the output interface 1703, for example, implement a function implemented by the processor 1601 in the foregoing embodiment. The communication apparatus may be a network device or a module of the network device, or may be a first terminal device or a module of the first terminal device, or may be a second terminal device or a module of the second terminal device. For more detailed descriptions of the input interface 1701, the logic circuit 1702, and the output interface 1703, directly refer to related descriptions of the first entity and the SMF network element in the foregoing method embodiments. Details are not described herein again.

An embodiment of this application further discloses a computer-readable storage medium storing instructions. When the instructions are executed, the method in the foregoing method embodiments is performed.

An embodiment of this application further discloses a computer program product including instructions. When the instructions are executed, the method in the foregoing method embodiments is performed.

An embodiment of this application further discloses a communication system. The communication system includes a network device, a first terminal device, and a second terminal device. For specific descriptions, refer to the communication methods shown in FIG. 5 and FIG. 7 to FIG. 11.

In the foregoing specific implementations, the objectives, technical solutions, and beneficial effects of this application are further described in detail. It should be understood that the foregoing descriptions are merely specific implementations of this application, but are not intended to limit the protection scope of this application.

## Claims

1. A communication method, performed by a first entity, comprising:
receiving first request information from a terminal device, wherein the first request information comprises first application identification information (703);
determining second information based on first information obtained from a session management function network element (704), wherein the second information is an extended mechanisms for DNS client subnet option corresponding to a first identifier or address information of a local domain name system DNS resolver corresponding to a first identifier (705), wherein the first identifier is a data network access identifier of a data network, in data networks corresponding to a second identifier, with a smallest service scope or closest to the terminal device, and the second identifier is at least one data network access identifier corresponding to a current location of the terminal device;
sending DNS request information to a central DNS server or the local DNS resolver based on the second information (707), wherein the DNS request information comprises the first application identification information, and the DNS request information is used to obtain address information of an application server;
**characterized in that** the method further comprises:
if the first identifier changes, receiving second indication information from the session management function, wherein the second indication information indicates deletion of the first information (1107); and
deleting the first information based on the second indication information (1108).

2. The method according to claim 1, wherein the method further comprises:
receiving the first information from the session management function network element, wherein the first information comprises the second information (502).

3. The method according to claim 1, wherein the method further comprises:
receiving the first information from the session management function network element, wherein the first information comprises the first application identification information (501) and the second information corresponding to the first application identification information.

4. The method according to any one of claims 1 to 3, wherein the method further comprises:
sending the first application identification information and/or first indication information to the session management function network element, (802) wherein the first application identification information is used to obtain the first information, and the first indication information indicates the session management function network element to send the first information (804).

5. The method according to any one of claims 1 to 4, wherein the second information is the extended mechanisms for DNS client subnet option, and the sending DNS request information to a central DNS server or the local DNS resolver based on the second information comprises: sending the DNS request information to the central DNS server, wherein the DNS request information further comprises the second information (806).

6. The method according to any one of claims 1 to 4, wherein the second information is the address information of the local DNS resolver, and the sending DNS request information to a central DNS server or the local DNS resolver based on the second information comprises: sending the DNS request information to the local DNS resolver (807).

7. A communication method, performed by a session management function, comprising:
sending first information to a first entity (703), wherein the first information comprises second information, or comprises first application identification information and second information corresponding to the first application identification information (702), the second information is an extended mechanisms for DNS client subnet option corresponding to a first identifier or address information of a local domain name system DNS resolver corresponding to a first identifier (704), the first identifier is a data network access identifier of a data network with a smallest service scope or closest to a terminal device in data networks corresponding to a second identifier, the second identifier is at least one data network access identifier corresponding to a current location of the terminal device, and the first information is used to determine the second information (707);
**characterized in that** the method further comprises:
if the first identifier changes, sending second indication information to the first entity (1107), wherein the second indication information indicates deletion of the first information (1107).

8. The method according to claim 7, wherein the method further comprises:
receiving the first application identification information and/or first indication information from the first entity; and
the sending first information to a first entity comprises:
sending the first information to the first entity based on the first application identification information and/or the first indication information (804).

9. A communication apparatus, comprising: means for performing the method according to any one of claims 1 to 6.

10. A communication apparatus, comprising: means for performing the method according to any one of claims 7 to 8.

11. A communication system, comprising:
the apparatus according to claim 9 and the apparatus according to claim 10.

12. The communication system according to claim 11, further comprising:
the central DNS server configured to receive the DNS request information.

13. The communication system according to claim 11, further comprising:
the local DNS resolver configured to receive the DNS request information.

14. A computer-readable storage medium, wherein the computer-readable storage medium stores a computer program or computer instructions, and when the computer program or the computer instructions are run, the method according to any one of claims 1 to 8 is implemented.

15. A computer program product, comprising instructions, wherein when the instructions are executed, the method according to any one of claims 1 to 8 is implemented.

## Patentansprüche

1. Kommunikationsverfahren, das durch eine erste Einheit durchgeführt wird, umfassend:
Empfangen erster Anforderungsinformationen von einer Endgerätevorrichtung, wobei die ersten Anforderungsinformationen erste Anwendungsidentifikationsinformationen (703) umfassen;
Bestimmen zweiter Informationen auf Grundlage erster Informationen, die von einem Sitzungsverwaltungsfunktionsnetzwerkelement (704) erlangt wurden, wobei die zweiten Informationen erweiterte Mechanismen für die DNS-Client-Teilnetzoption sind, die einer ersten Kennung entsprechen, oder Adressinformationen eines lokalen Domain-Name-System (DNS)-Resolvers sind, die einer ersten Kennung (705) entsprechen, wobei die erste Kennung eine Datennetzwerkzugriffskennung eines Datennetzwerks in einer zweiten Kennung entsprechenden Datennetzwerken ist, mit dem kleinsten Dienstumfang oder der Endgerätevorrichtung am nächsten liegend, und die zweite Kennung mindestens eine Datennetzwerkzugriffskennung ist, die einem aktuellen Standort der Endgerätevorrichtung entspricht;
Senden von DNS-Anforderungsinformationen an einen zentralen DNS-Server oder den lokalen DNS-Resolver auf Grundlage der zweiten Informationen (707), wobei die DNS-Anforderungsinformationen die ersten Anwendungsidentifikationsinformationen umfassen und
die DNS-Anforderungsinformationen verwendet werden, um Adressinformationen eines Anwendungsservers zu erlangen;**dadurch gekennzeichnet, dass** das Verfahren ferner Folgendes umfasst:
wenn sich die erste Kennung ändert, Empfangen zweiter Angabeinformationen von der Sitzungsverwaltungsfunktion, wobei die zweiten Angabeinformationen das Löschen der ersten Informationen (1107) angeben; und
Löschen der ersten Informationen auf Grundlage der zweiten Angabeinformationen (1108).

2. Verfahren nach Anspruch 1, wobei das Verfahren ferner Folgendes umfasst:
Empfangen der ersten Informationen vom Sitzungsverwaltungsfunktionsnetzwerkelement, wobei die ersten Informationen die zweiten Informationen (502) umfassen.

3. Verfahren nach Anspruch 1, wobei das Verfahren ferner Folgendes umfasst:
Empfangen der ersten Informationen vom Sitzungsverwaltungsfunktionsnetzwerkelement, wobei die ersten Informationen die ersten Anwendungsidentifikationsinformationen (501) und die zweiten Informationen umfassen, die den ersten Anwendungsidentifikationsinformationen entsprechen.

4. Verfahren nach einem der Ansprüche 1 bis 3, wobei das Verfahren ferner Folgendes umfasst:
Senden der ersten Anwendungsidentifikationsinformationen und/oder ersten Angabeinformationen an das Sitzungsverwaltungsfunktionsnetzwerkelement (802), wobei die ersten Anwendungsidentifikationsinformationen verwendet werden,
um die ersten Informationen zu erlangen, und die ersten Angabeinformationen das Sitzungsverwaltungsfunktionsnetzwerkelement anweisen, die ersten Informationen (804) zu senden.

5. Verfahren nach einem der Ansprüche 1 bis 4, wobei die zweiten Informationen die erweiterten Mechanismen für die DNS-Client-Teilnetzoption sind und das Senden von DNS-Anforderungsinformationen an einen zentralen DNS-Server oder den lokalen DNS-Resolver auf Grundlage der zweiten Informationen Folgendes umfasst: Senden der DNS-Anforderungsinformationen an den zentralen DNS-Server, wobei die DNS-Anforderungsinformationen ferner die zweiten Informationen (806) umfassen.

6. Verfahren nach einem der Ansprüche 1 bis 4, wobei die zweiten Informationen die Adressinformationen des lokalen DNS-Resolvers sind und das Senden von DNS-Anforderungsinformationen an einen zentralen DNS-Server oder den lokalen DNS-Resolver auf Grundlage der zweiten Informationen Folgendes umfasst: Senden der DNS-Anforderungsinformationen an den lokalen DNS-Resolver (807) .

7. Kommunikationsverfahren, das durch eine Sitzungsverwaltungsfunktion durchgeführt wird, umfassend:
Senden erster Informationen an eine erste Einheit (703), wobei die ersten Informationen zweite Informationen umfassen oder
erste Anwendungsidentifikationsinformationen und zweite Informationen umfassen, die den ersten Anwendungsidentifikationsinformationen (702) entsprechen, wobei die zweiten Informationen erweiterte Mechanismen für die DNS-Client-Teilnetzoption sind, die einer ersten Kennung entsprechen, oder Adressinformationen eines lokalen Domain-Name-System (DNS)-Resolvers sind, die einer ersten Kennung (704) entsprechen, wobei die erste Kennung eine Datennetzwerkzugriffskennung eines Datennetzwerkes mit einem kleinsten Dienstumfang ist oder einer Endgerätevorrichtung in Datennetzwerken am nächsten liegt, die einer zweiten Kennung entspricht, wobei die zweite Kennung mindestens eine Datennetzwerkzugriffskennung ist, die einem aktuellen Standort der Endgerätevorrichtung entspricht, und die ersten Informationen zum Bestimmen der zweiten Informationen (707) verwendet werden;**dadurch gekennzeichnet, dass** das Verfahren ferner Folgendes umfasst:
wenn sich die erste Kennung ändert, Senden zweiter Angabeinformationen an die erste Einheit (1107), wobei die zweiten Angabeinformationen eine Löschung der ersten Informationen (1107) angeben.

8. Verfahren nach Anspruch 7, wobei das Verfahren ferner Folgendes umfasst:
Empfangen der ersten Anwendungsidentifikationsinformationen und/oder der ersten Angabeinformationen von der ersten Einheit; und
wobei das Senden erster Informationen an eine erste Einheit Folgendes umfasst:
Senden der ersten Informationen an die erste Einheit auf Grundlage der ersten Anwendungsidentifikationsinformationen und/oder der ersten Angabeinformationen (804).

9. Kommunikationsvorrichtung, umfassend: Mittel zum Durchführen des Verfahrens nach einem der Ansprüche 1 bis 6.

10. Kommunikationsvorrichtung, umfassend: Mittel zum Durchführen des Verfahrens nach einem der Ansprüche 7 bis 8.

11. Kommunikationssystem, umfassend:
die Vorrichtung nach Anspruch 9 und die Vorrichtung nach Anspruch 10.

12. Kommunikationssystem nach Anspruch 11, ferner umfassend:
den zentralen DNS-Server, der dazu konfiguriert ist, die DNS-Anforderungsinformationen zu empfangen.

13. Kommunikationssystem nach Anspruch 11, ferner umfassend:
den lokalen DNS-Resolver, der dazu konfiguriert ist, die DNS-Anforderungsinformationen zu empfangen.

14. Computerlesbares Speichermedium, wobei das computerlesbare Speichermedium ein Computerprogramm oder Computeranweisungen speichert und, wenn das Computerprogramm oder die Computeranweisungen ausgeführt werden, das Verfahren nach einem der Ansprüche 1 bis 8 umgesetzt wird.

15. Computerprogrammprodukt, umfassend Anweisungen, wobei, wenn die Anweisungen auf ausgeführt werden, das Verfahren nach einem der Ansprüche 1 bis 8 umgesetzt wird.

## Revendications

1. Procédé de communication, réalisé par une première entité, comprenant :
la réception de premières informations de requête à partir d'un dispositif terminal, dans lequel les premières informations de requête comprennent des premières informations d'identification d'application (703) ;
la détermination de secondes informations sur la base de premières informations obtenues à partir d'un élément de réseau de fonction de gestion de session (704), dans lequel les secondes informations sont des mécanismes étendus pour une option de sous-réseau client DNS correspondant à un premier identifiant ou des informations d'adresse d'un résolveur de système de nom de domaine local, DNS, correspondant à un premier identifiant (705), dans lequel le premier identifiant est un identifiant d'accès au réseau de données d'un réseau de données, dans des réseaux de données correspondant à un second identifiant, ayant une portée de service la plus petite ou étant le plus proche du dispositif terminal, et le second identifiant est au moins un identifiant d'accès au réseau de données correspondant à un emplacement actuel du dispositif terminal ;
l'envoi d'informations de requête DNS à un serveur DNS central ou au résolveur DNS local sur la base des secondes informations (707), dans lequel les informations de requête DNS comprennent les premières informations d'identification d'application, et
les informations de requête DNS sont utilisées pour obtenir des informations d'adresse d'un serveur d'application ;**caractérisé en ce que** le procédé comprend également :
si le premier identifiant change, la réception de secondes informations d'indication à partir de la fonction de gestion de session, dans lequel les secondes informations d'indication indiquent la suppression des premières informations (1107) ; et la suppression des premières informations sur la base des secondes informations d'indication (1108).

2. Procédé selon la revendication 1, dans lequel le procédé comprend également :
la réception des premières informations à partir de l'élément de réseau de fonction de gestion de session, dans lequel les premières informations comprennent les secondes informations (502).

3. Procédé selon la revendication 1, dans lequel le procédé comprend également :
la réception des premières informations à partir de l'élément de réseau de fonction de gestion de session, dans lequel les premières informations comprennent les premières informations d'identification d'application (501) et les secondes informations correspondant aux premières informations d'identification d'application.

4. Procédé selon l'une quelconque des revendications 1 à 3, dans lequel le procédé comprend également :
l'envoi des premières informations d'identification d'application et/ou des premières informations d'indication à l'élément de réseau de fonction de gestion de session, (802) dans lequel les premières informations d'identification d'application sont utilisées pour obtenir les premières informations, et les premières informations d'indication indiquent à l'élément de réseau de fonction de gestion de session d'envoyer les premières informations (804).

5. Procédé selon l'une quelconque des revendications 1 à 4, dans lequel les secondes informations sont les mécanismes étendus pour une option de sous-réseau client DNS, et l'envoi d'informations de requête DNS à un serveur DNS central ou au résolveur DNS local sur la base des secondes informations comprend : l'envoi des informations de requête DNS au serveur DNS central, dans lequel les informations de requête DNS comprennent également les secondes informations (806).

6. Procédé selon l'une quelconque des revendications 1 à 4, dans lequel les secondes informations sont les informations d'adresse du résolveur DNS local, et l'envoi d'informations de requête DNS à un serveur DNS central ou au résolveur DNS local sur la base des secondes informations comprend : l'envoi des informations de requête DNS au résolveur DNS local (807).

7. Procédé de communication, réalisé par une fonction de gestion de session, comprenant :
l'envoi de premières informations à une première entité (703), dans lequel les premières informations comprennent des secondes informations, ou comprennent des premières informations d'identification d'application et des secondes informations correspondant aux premières informations d'identification d'application (702), les secondes informations sont des mécanismes étendus pour une option de sous-réseau client DNS correspondant à un premier identifiant ou des informations d'adresse d'un résolveur de système de nom de domaine local, DNS, correspondant à un premier identifiant (704), le premier identifiant est un identifiant d'accès au réseau de données d'un réseau de données ayant la plus petite portée de service ou
étant le plus proche d'un dispositif terminal dans des réseaux de données correspondant à un second identifiant, le second identifiant est au moins un identifiant d'accès au réseau de données correspondant à un emplacement actuel du dispositif terminal, et les premières informations sont utilisées pour déterminer les secondes informations (707) ;**caractérisé en ce que** le procédé comprend également :
si le premier identifiant change, l'envoi de secondes informations d'indication à la première entité (1107), dans lequel les secondes informations d'indication indiquent la suppression des premières informations (1107).

8. Procédé selon la revendication 7, dans lequel le procédé comprend également :
la réception des premières informations d'identification d'application et/ou des premières informations d'indication à partir de la première entité ; et
l'envoi de premières informations à une première entité comprend :
l'envoi des premières informations à la première entité sur la base des premières informations d'identification d'application et/ou des premières informations d'indication (804).

9. Appareil de communication, comprenant : un moyen de réalisation du procédé selon l'une quelconque des revendications 1 à 6.

10. Appareil de communication, comprenant : un moyen de réalisation du procédé selon l'une quelconque des revendications 7 à 8.

11. Système de communication, comprenant :
l'appareil selon la revendication 9 et l'appareil selon la revendication 10.

12. Système de communication selon la revendication 11, comprenant également :
le serveur DNS central configuré pour recevoir les informations de requête DNS.

13. Système de communication selon la revendication 11, comprenant également :
le résolveur DNS local configuré pour recevoir les informations de requête DNS.

14. Support de stockage lisible par ordinateur, dans lequel le support de stockage lisible par ordinateur stocke un programme informatique ou des instructions informatiques, et lorsque le programme informatique ou les instructions informatiques sont exécutés, le procédé selon l'une quelconque des revendications 1 à 8 est mis en œuvre.

15. Produit de programme informatique, comprenant des instructions, dans lequel lorsque les instructions sont exécutées, le procédé selon l'une quelconque des revendications 1 à 8 est mis en œuvre.
